# EUROPÄISCHE PATENTSCHRIFT

(11) **EP 1 608 906 B1**
(45) Veröffentlichungstag und Bekanntmachung des Hinweises auf die Patenterteilung: **16.03.2011**
(21) Anmeldenummer: 04721815.1
(22) Anmeldetag: 19.03.2004
(51) Int. Cl.: F16L 59/14

(54) **ISOLIERANORDNUNG FÜR ROHRE, INSBESONDERE FÜR ROHRE EINES PNEUMATIKSYSTEMS IN EINEM VERKEHRSFLUGZEUG**
INSULATION ARRANGEMENT FOR PIPES, IN PARTICULAR FOR PIPES IN A PNEUMATIC SYSTEM ON A PASSENGER AIRCRAFT
ENSEMBLE ISOLANT POUR CONDUITS, EN PARTICULIER POUR DES CONDUITS D'UN SYSTEME PNEUMATIQUE DANS UN AVION COMMERCIAL

(30) Priorität: 22.03.2003 DE 10312871
(43) Veröffentlichungstag der Anmeldung: 28.12.2005
(73) Patentinhaber: Airbus Deutschland GmbH, 21129 Hamburg (DE)
(72) Erfinder: HUMMEL, Gerhard, 28279 Bremen (DE); ROHWEDDER, Horst-Dieter, 28816 Stuhr (DE)
(74) Vertreter: Hansmann, Dierk
(86) Internationale Anmeldenummer: PCT/DE2004/000579
(87) Internationale Veröffentlichungsnummer: WO 2004/083712

(56) Entgegenhaltungen:
- GB-A- 797 208
- US-A- 3 541 539
- US-A- 3 904 379
- US-A- 3 911 961
- US-A- 3 916 955
- US-A- 4 287 011
- US-A- 4 576 661
- US-A1- 2005 146 118
- US-A1- 2006 174 962

## Beschreibung

Die Erfindung betrifft eine Isolieranordnung für Rohre, insbesondere für Rohre eines Pneumatiksystems in einem Verkehrsflugzeug.

Für Pneumatikrohre in einem Verkehrsflugzeug ist es notwendig, aufgrund der hohen Temperaturen von bis zu 260°C eine Wärmeisolierung durchzuführen und Strukturteile des Flugzeuges gegen die hohen Temperaturen zu schützen. Für derartige Isolierungen werden in Airbus-Flugzeugen als Außenhülle Titan-Folien mit ungefähr 0,1 mm Dicke verwendet, die zwei Lagen Glaswolle mit einer Dicke von jeweils 1" umhüllen. An den Enden des entsprechenden Rohres werden Z-Profile aufgeschweißt, die zum einen die Längsbegrenzung für die Glaswollenlagen bilden und zum anderen als Träger für die Titanaußenhülle dienen. Die Titanaußenhülle wird auf das Z-Profil aufgeschweißt. Eine derartige Rohrinstallation ist aufwändig und kompliziert händelbar, da unter anderem vor dem Verschweißen der Titanaußenhülle zwei Lagen Isolierschicht auf das Rohr aufgebracht werden müssen und danach die Titanfolie auf das Z-Profil geschweißt wird. Eine derartige Isolieranordnung ist auch nicht mehr vom Rohr abnehmbar. Wenn es zu Schäden an der Isolierung kommt, beispielsweise durch mechanische Einwirkungen, die ein Verbeulen oder Einreißen der Isolierung bewirken, ist eine Reparatur nicht möglich und es muß ein aufwendiger Austausch des gesamten Rohres in Betracht gezogen werden.

Aus der US 3 916 955 (Netterstedt et al.) ist eine Isolieranordnung für Rohre bekannt, welche eine Isolierlage und eine diese umgebende Außenhülle umfaßt, wobei die Außenhülle eine verschließbare Längsnaht und jeweilige Endabschnitte aufweist. Bei der bekannten Isolieranordnung ist die Außenhülle aus einem Stahlblech hergestellt, welches an der Längsnaht und an den Endabschnitten nach außen gerichtete Flansche aufweist, die zur Verbindung der Teile der Außenhülle miteinander verschweißt werden. Aus der US 3 904 379 (Oser et al.) ist ein reflektierender Wärmeisolationsmantel aus Metall bekannt, welcher zwei halbzylindrische Mantelabschnitte umfaßt, von denen jeder ein inneres und ein äußeres Begrenzungsblech aufweist. Zwischen diesen ist eine Anzahl von durch Abstandhalter in einem vorgegebenen Abstand gehaltenen Reflexionsblechen angeordnet. Damit ein Ausgleich von Längstoleranzen möglich ist, besteht der bekannte Wärmeisolationsmantel aus zwei Abschnitten, welche jeweils äußere und innere Begrenzungsbleche und jeweils einen eigenen Satz reflektierender Isolationsbleche umfassen, von denen jeweils die Bleche des einen Abschnitts die Bleche des anderen Abschnitts überlappen und in Längsrichtung des zu isolierenden Rohrs gegeneinander nach Art eines Teleskopaufbaus verschiebbar sind. An den äußeren Enden sind die halbzylindrischen Hälften der besagten Abschnitte durch bogenförmige Abschlußplatten verschlossen. Die bekannte reflektierende Ganzmetallisolation stellt einen robusten Isolationsaufbau dar, der wesentlich fester ist als ein solcher mit Faserstoffen wie Glasfasern oder Steinwolle, naturgemäß aber auch sehr schwer, und ist insbesondere beispielsweise zur Isolierung von Rohren in Kernkraftwerken vorgesehen.

Die US 3 911 961 (Peyton et al.) beschreibt einen für hohe Temperaturen vorgesehenen Isolator, bei dem eine durch ein Laminat gebildete reflektierende Schale in einem Abstand um ein zu isolierendes Rohr vorgesehen ist. Die reflektierende Schale ist hergestellt aus einer extrem dünnen Aluminiumfolie, welche auf einen Träger aus einem harzimprägniertem Glasfasertextil laminiert ist. Die reflektierende Schale wird durch ringförmige Abstandhalter in einem vorgegebenen Abstand um das zu isolierende Rohr gehalten, welche bezüglich der Längsrichtung in Abständen vorgesehen sind. Weiter sind ringförmige Verstärkungen vorgesehen, die dazu dienen, das Rohr mitsamt seiner Isolierung halten zu können.

Die US 4 287 011 (Derbyshire) beschreibt eine Verschlußmethode für einen auf vielfältige Weise verwendbaren Blechmantel oder ähnliches, beispielsweise einen Mantel zur wasserfesten Umhüllung eines Spleißes in einem Kabel oder einen Mantel, welcher die Isolierung eines Rohres umgibt. Dabei wird ein bezüglich der Längsrichtung des Rohres verlaufender Saum durch Umbördeln und Kleben verschlossen.

Schließlich ist aus GB 797 208 A (The British Refrasil Company) bekannt, zum Zwecke der Isolation vorgesehene Abschirmungen durch voneinander beabstandete dünne Metallbleche herzustellen, zwischen denen ein isolierendes Material, beispielsweise Glasfasern, angeordnet ist und die zum Zwecke einer Erhöhung der Festigkeit mit einer Prägung versehen sind.

Die Aufgabe der Erfindung ist es, eine Isolieranordnung für Rohre zu schaffen, die für den Einsatz an Pneumatikrohren für Verkehrsflugzeuge in einer entsprechend leichten Bauweise geeignet ist, die mit einem geringen Aufwand zu installieren ist und die auch eine Reparaturmöglichkeit ohne großen Aufwand bei Beschädigung bietet.

Die Aufgabe wird erfindungsgemäß durch eine Isolieranordnung mit den Merkmalen des Anspruchs 1 gelöst.

Dabei ist es insbesondere vorteilhaft, dass eine derartige Isolieranordnung in einer Vormontage leicht herstellbar ist und die Installation am Pneumatik-Rohrleitungssystem eines Flugzeugs schnell und unkompliziert vorgenommen werden kann. Die leichte und gleichzeitig temperaturbeständige Ausführung der Isolieranordnung ermöglicht die Verwendung im pneumatischen System eines Flugzeugs. Mit der erfindungsgemäß vorgesehenen Schalentechnik kann die Isolierung separat ausgebaut werden und im Bedarfsfall können beschädigte Isolierteile ohne großen Aufwand ausgetauscht werden.

Weiterbildungen und vorteilhafte Ausgestaltungen sind in den Ansprüchen 2 bis 8 angegeben.

Die Isolieranordnung nach den Ansprüchen 2 und 3 zeigt jeweils eine einfache Realisierungsmöglichkeit einer Schalentechnik, in die das Isoliermaterial einlegbar ist.

Mit den Maßnahmen nach Anspruch 4 oder 5 ist eine bevorzugte und sichere Möglichkeit des verschließens der Längsnaht vorgesehen.

In den Ansprüchen 6 und 7 werden vorteilhafte Maßnahmen zur Sicherstellung eines Überwachungssystems gegen Leckagen am Rohleitungssystem genannt.

Insbesondere bei langen oder gekrümmten Rohrabschnitten ist das Einsetzen von verstärkungselementen nach dem Anspruch 8 vorteilhaft, um eine ausreichende Stabilität der Isolierungsanordnung zu erzielen.

Weitere Einzelheiten und Vorteile ergeben sich aus der nachfolgenden Beschreibung von Ausführungsbeispielen der Erfindung.

In der Zeichnung sind Ausführungsbeispiele der Erfindung dargestellt, welche nachstehend anhand der Figuren 1 bis 7 näher beschrieben sind. In den Figuren sind gleiche Bauteile mit gleichen Bezugszeichen versehen.

Es zeigen im einzelnen:
- Fig. 1: eine erfindungsgemäße Isolieranordnung für Pneumatikrohre in einer Draufsicht,
- Fig. 2: eine vergrößerte Detaildarstellung der Oberfläche der Außenhülle der Rohrisolierung,
- Fig. 3: eine Einzelheitsdarstellung der an der Isolieranordnung vorgesehenen Verbindung zwischen Z-Profil und Titan-Folie,
- Fig. 4: einen Querschnitt durch ein Pneumatikrohr mit der erfindungsgemäßen Isolieranordnung gemäß Schnitt AA von Fig. 1,
- Fig. 5A, B: Einzelheitsdarstellungen im Bereich einer Längsnaht der Isolieranordnung,
- Fig. 6A,B: eine Einzelheitsdarstellung mit einer vergrößerten Schnittdarstellung der in der Isolieranordnung vorgesehenen Auslasslöcher und
- Fig. 7A,B,C: Ausführungsformen von Versteifungselementen innerhalb der Isolieranordnung.

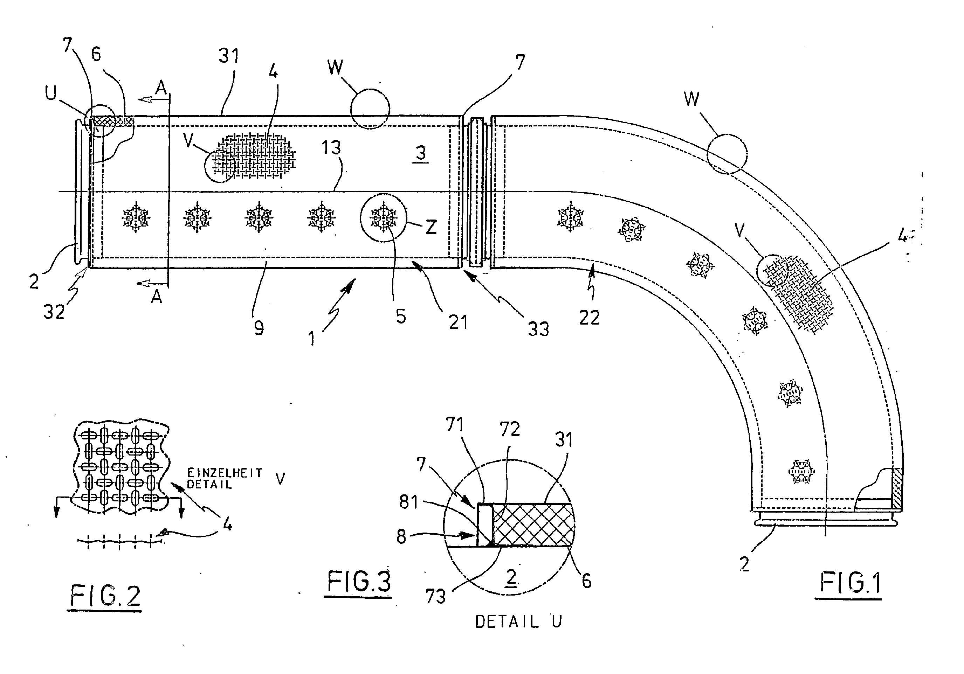

In Fig. 1 ist eine Isolieranordnung 1 für Rohre 2 ersichtlich. Die Rohre 2 sind vorzugsweise als Pneumatikrohre in einem Verkehrsflugzeug vorgesehen und werden aufgrund der auftretenden hohen Temperaturen eines Luftstromes bis zu 260°C im Rohrinneren mit aus Glaswolle bestehenden Isolierlagen 6 wärmeisoliert. Die umgebende Flugzeugstruktur wird somit gegen eine zu hohe Wärmeabstrahlung der Rohre 2 geschützt. Für die Isolieranordnung 1 ist es ein wesentliches Erfordernis, in einer leichten Bauweise ausgeführt zu sein. Als Außenhülle 3 der Isolierung wird deshalb eine Titan-Folie 31 mit ca. 0,1 mm Dicke genutzt. In Fig. 2 ist gezeigt, dass die Titanfolie 31 eine Profilierung 4 aufweist, um die Steifigkeit der Außenhülle zu erhöhen.

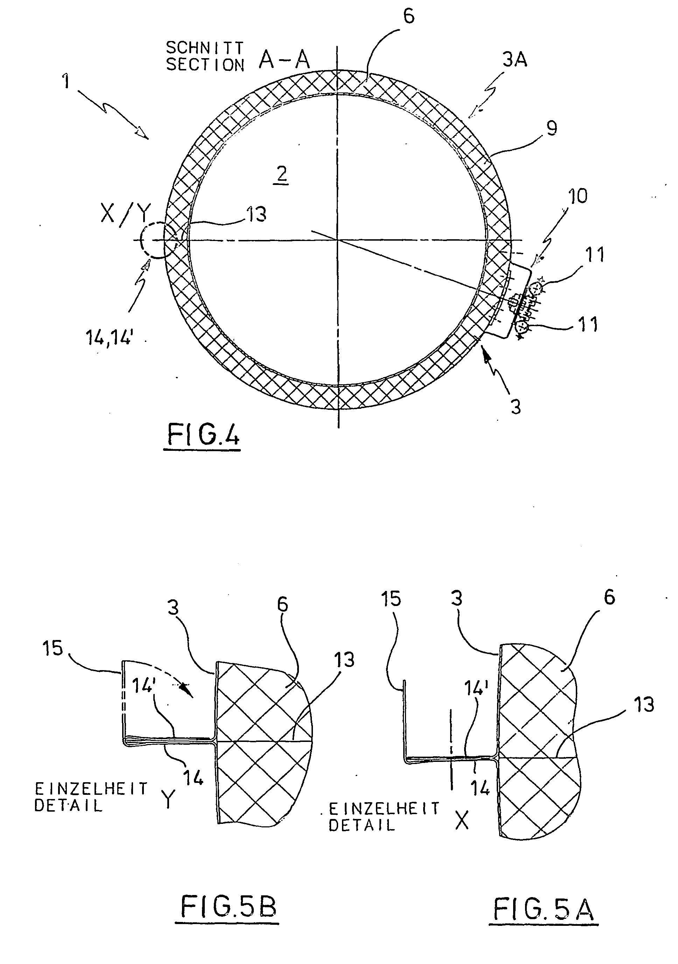

Ersichtlich in Fig. 1 sind zwei Rohrabschnitte 21 und 22, wobei der Rohrabschnitt 22 gekrümmt ausgebildet ist. Die Rohrabschnitte 21, 22 und weitere, nicht gezeigte Rohrabschnitte werden zu einem Pneumatikrohrleitungssystem gefügt, vorzugsweise mittels Flanschverbindungen. Nach der Installation der Rohrabschnitte 21, 22 wird die Isolieranordnung 1 am Rohr 2 montiert. Die Isolieranordnung 1 ist als Schale ausgebildet, wobei eine Halbschale (nicht gezeigt) oder eine Vollschale 9 vorgesehen sein kann. Die Vollschale 9 weist eine Längsnaht 13 in der Titanaußenhülle 3 auf; bei einer Halbschale wären zwei Längsnähte notwendig. Die Titan-Folie 31 weist Abmessungen entsprechend des Umfangs der notwendigen Außenhülle 3 für die Schale 9 eines Rohrabschnittes 21 oder 22 auf. In einem ersten Verfahrensschritt werden die Endabschnitte 32 und 33 mit einem Z-Profil 7 verbunden (siehe Detaildarstellung in Fig. 3). Auch andere übliche Profilformen sind einsetzbar. Am oberen Steg 71 des Z-Profils 7 wird die Titan-Folie 31 aufgeschweißt. Aufgrund der Z-Form des Abschlussprofils 7 wird mit dem Mittelsteg 72 und dem unteren Steg 73 eine Aufnahme für eine Isolierlage 6 gebildet. Als Isoliermaterial wird Glaswolle verwendet. Nach dem Fertigstellen der Verbindungen zwischen dem Z-Profil 7 am jeweiligen Endabschnitt 32 und 33 kann die Isolierlage 6 in die gebildete Schale 9 eingelegt werden. Falls es notwendig ist, kann mit einem temperaturbeständigen Klebstoff die Isolierlage 6 an der Innenseite der Titanfolie 31 fixiert werden. Die so vormontierte Schale 9 ist nunmehr für die Montage am Pneumatikrohr 2 bereit und wird durch das Öffnen der Längsnaht 13 über das Rohr 2 gestreift und im Bereich der Längsnaht durch Schweißen oder Kleben geschlossen. Der Installationsaufwand vor Ort kann damit erheblich verringert und die Montage vereinfacht werden. Das Verschließen der Längsnaht 13 ist in den nachfolgenden Figuren 4 und 5 erläutert..

In Fig. 4 ist ein Querschnitt einer Isolieranordnung 1 in der Ausbildung als eine Vollschale 9 gezeigt. Der Querschnitt entspricht dem Schnitt A-A aus Fig. 1. Die Vollschale 9 wird im Bereich der Längsnaht 13 geöffnet und geschlossen. In Fig. 5 ist der Bereich der Längsnaht 13 als Einzelheit dargestellt. In Fig. 5A ist ersichtlich, dass an der Außenhülle 3 Fügestege 14 und 14' an der zusammenstoßenden Längsnaht 13 angeordnet sind, die zum Verschließen der Längsnaht 13 dienen. Die Fügestege 14, 14' werden durch Verkleben, Impulsschweißen oder andere Schweißmethoden verbunden und gemäß Fig. 5B kann abschließend ein Sicherungssteg 15 als formschließende Verbindung gemäß der Pfeilrichtung gebogen werden und somit die beiden Fügestege 14, 14' gegen ein Öffnen zusätzlich sichern.

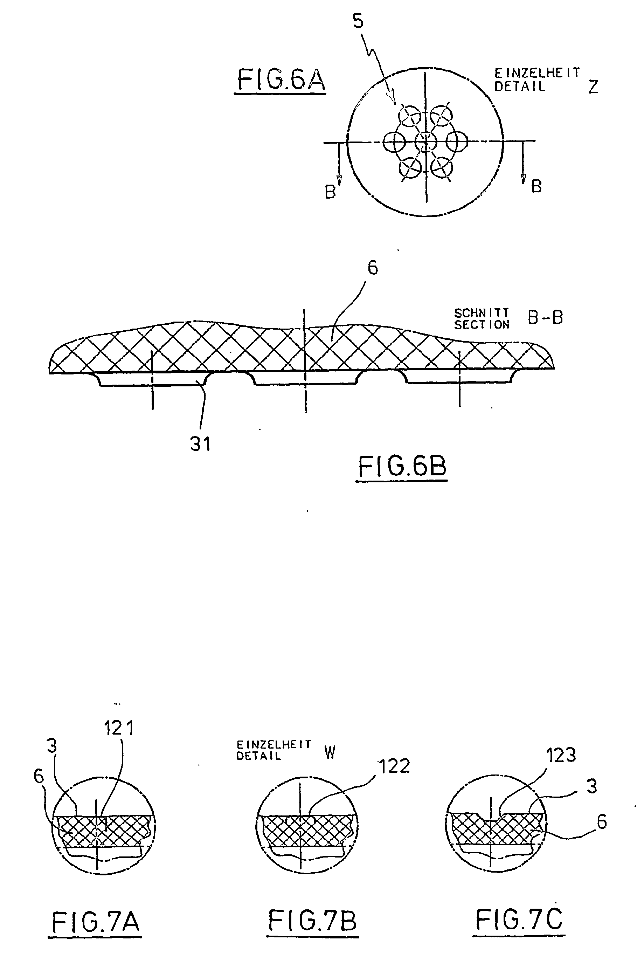

In Fig. 1 in Verbindung mit Fig. 4 ist weiterhin ersichtlich, dass Warndrähte 11 eines Überwachungssystems, eines sogenannten "Overheat Detection Systems" gegen mögliche Undichtigkeiten im Pneumatikrohrleitungssystem mittels Halter 10 an der Titanaußenhülle 3 befestigt sind. Die Halter 10 sind vorzugsweise auf die Titanaußenhülle 3 aufgeschweißt. Die Warndrähte 11 verlaufen entlang der Pneumatikrohre 2 und sind oberhalb von Auslasslöchern 5 positioniert. Die Anordnung der Auslasslöcher 5 in der Titanfolie 31 ist als Einzelheit in Fig. 6 gezeigt. Fig. 6A zeigt eine Draufsicht auf die Titan-Außenhülle 3 im Bereich der Auslasslöcher, in Fig. 6B ist ein Querschnitt in einer Schnittdarstellung ersichtlich, die die Titanfolie 31 mit den Auslasslöchern 5 zeigt. Bei einem möglichen Leck strömt heiße Luft durch die Isolierlage 6 in die Auslaßlöcher 5, die dem Leck am nächsten liegen. Die oberhalb der Auslasslöcher 5 positionierten Warndrähte werden heiß und geben bei Überhitzung ein Signal ab, wobei die Position eines auftretenden Lecks genau detektiert werden kann.

Um die Funktionsfähigkeit des Überwachungssystems zu gewährleisten ist sicherzustellen, dass die Warndrähte 11 jeweils direkt oberhalb der Auslaßlöcher 5 positioniert sind. Dazu kann es notwendig sein, eine Verdrehsicherung 8 zwischen dem Pneumatikrohr 2 und der Schale 9 vorzusehen, da ansonsten die Isolieranordnung 1 auf dem Rohr 2 frei bewegt werden kann. In der Einzelheitsdarstellung der Fig. 3 ist gezeigt, dass mittels einer Kehlnaht 81 eines temperaturbeständigen Klebers oder einer Paste zwischen dem Z-Profil 7 im Endbereich 32 bzw. 33 einer Titanhülle 3 und dem Rohr 2 eine derartige Verbindung realisiert wird. Die Kehlnähte 81 können ca. 50mm lang sein und an mehreren Stellen des Umfangs zwischen dem Z-Profil 7 und dem Rohr 2 gesetzt werden.

Wenn nunmehr ein Austausch der Isolierung 1 notwendig wird, beispielsweise bei möglichen Beschädigungen an der Titanfolie 31, ist die Verdrehsicherung 8 zu lösen und die Längsnaht 13 zu öffnen. Die Isolierung 1 kann unaufwändig vom entsprechenden Rohrabschnitt 21 bzw. 22 abgenommen und durch ein Austauschteil ersetzt werden. Nach dem Schließen der Längsnaht der Austauschisolierung ist die Reparatur beendet und gegebenenfalls wird als Verdrehsicherung 8 eine neue Kehlnaht 81 zwischen der Titan-Außenhülle 3 und dem Rohr 2 aufgebracht.

In Fig. 7 sind Ausführungsformen von Versteifungselementen 12 gezeigt, die zur Verstärkung der Titan-Außenhülle 3, insbesondere bei längeren Rohrabschnitten 21 oder in gekrümmten Rohrabschnitten 22 angewendet werden können. Derartige Versteifungselemente können vorzugsweise als L-Profile 121 (siehe Fig. 7A), als U-Profile 122 (siehe Fig. 7B) oder auch als Sicken123 (siehe Fig. 7C) ausgebildet sein. Sie werden auf die Innenseite der Titanhülle 3 geschweißt oder in die Folie 31 eingebracht. Es ist vorgesehen, derartige Versteifungselemente 12 bedarfsweise partiell einzusetzen.

## Patentansprüche

1. Isolieranordnung für Rohre, insbesondere für Rohre eines Pneumatiksystems in einem Verkehrsflugzeug, die mindestens eine Isolierlage (6) sowie eine Aussenhülle (3) aufweist, wobei die Aussenhülle (3) mindestens eine verschliessbare Längsnaht (13) und einen ersten und einen zweiten Endabschnitt aufweist, **gekennzeichnet dadurch, dass** die Aussenhülle (3) durch eine Titanfolie (31) mit einer Profilierung (4) gebildet ist und die Titanfolie (31) in dem ersten Endabschnitt (32) und in dem zweiten Endabschnitt (33) jeweils mit einem Abschlussprofil (7) verbunden ist und damit eine Schale (9) gebildet ist, in die die Isolierlage (6), die aus Glaswolle gebildet ist, einlegbar ist, das Abschlussprofil (7) als ein Z-Profil ausgebildet ist, welches mit einem oberen Steg (71) mit der Titanfolie (31) verbunden ist und ein Mittelsteg (72) sowie ein unterer Steg (73) eine Aufnahme für die Isolierlage (6) bilden.

2. Isolieranordnung nach Anspruch 1, **dadurch gekennzeichnet, dass** die Schale (9) als eine Vollschale ausgebildet ist, die an der Längsnaht (13) geöffnet und über das Rohr (2) gestreift wird sowie mittels an der Längsnaht (13) vorgesehenen Fügestegen (14, 14') verschlossen wird.

3. Isolieranordnung nach Anspruch 1, **dadurch gekennzeichnet, dass** die Schale (9) als eine Halbschale ausgebildet ist, die zwei Längsnähte aufweist, am Rohr (2) die beiden Halbschalen positioniert werden sowie mittels an den Längsnähten vorgesehenen Fügestegen (14, 14') die Isolierung verschlossen wird.

4. Isolieranordnung nach einem der Ansprüche 1 bis 3, **dadurch gekennzeichnet, dass** die Verbindung an der Längsnaht (13) zwischen den Fügestegen (14, 14') mittels Kleben oder Schweißen hergestellt wird.

5. Isolieranordnung nach einem der Ansprüche 1 bis 4, **dadurch gekennzeichnet, dass** im Bereich der Längsnahtverbindung (13) ein Sicherungssteg (15) zur formschließenden Sicherung der Verbindung vorgesehen ist.

6. Isolieranordnung nach einem der Ansprüche 1 bis 5, **dadurch gekennzeichnet, dass** die Außenhülle (3) Auslasslöcher (5) aufweist, oberhalb der Auslasslöcher (5) Warndrähte (11) angeordnet sind sowie eine Verdrehsicherung (8) vorgesehen ist, die zwischen dem Rohr (2) und der Schale (9) eine Positionsveränderung verhindert.

7. Isolieranordnung nach Anspruch 6, **dadurch gekennzeichnet, dass** die Verdrehsicherung (8) durch eine partielle Klebeverbindung, vorzugsweise als Kehlnaht (81) eines temperaturbeständigen Klebers oder einer Paste zwischen dem Außenprofil (7) und dem Rohr (2) gebildet ist.

8. Isolieranordnung nach einem der Ansprüche 1 bis 6, **dadurch gekennzeichnet, dass** auf die Innenseite der Titanfolie (31) zumindest partiell Versteifungselemente (12) aufgebracht werden.

## Claims

1. Insulating arrangement for pipes, in particular for pipes of a pneumatic system in a commercial aircraft, comprising at least one insulating layer (6) as well as an outer sheath (3), wherein the outer sheath (3) has at least one closable longitudinal seam (13) and a first and a second end portion, **characterized in that** the outer sheath (3) is formed by a titanium foil (31) having a profiling (4) and the titanium foil (31) is connected in the first end portion (32) and in the second end portion (33) in each case to an end profile (7) and hence a shell (9) is formed, into which the insulating layer (6), which is formed from glass wool, is insertable, the end profile (7) takes the form of a Z-shaped profile, which is connected by an upper web (71) to the titanium foil (31), and a central web (72) and a lower web (73) form a receiver for the insulating layer (6).

2. Insulating arrangement according to claim 1, **characterized in that** the shell (9) takes the form of a complete shell, which is opened at the longitudinal seam (13) and slipped over the pipe (2) and is closed by means of joining webs (14, 14') that are provided at the longitudinal seam (13).

3. Insulating arrangement according to claim 1, **characterized in that** the shell (9) takes the form of a half-shell having two longitudinal seams, the two half-shells are positioned on the pipe (2) and the insulation is closed by means of joining webs (14, 14') that are provided at the longitudinal seams.

4. Insulating arrangement according to one of claims 1 to 3, **characterized in that** the join at the longitudinal seam (13) between the joining webs (14, 14') is produced by means of bonding or welding.

5. Insulating arrangement according to one of claims 1 to 4, **characterized in that** in the region of the longitudinal seam join (13) a locking web (15) is provided for form-fit locking of the join.

6. Insulating arrangement according to one of claims 1 to 5, **characterized in that** the outer sheath (3) has exit holes (5), above the exit holes (5) alarm wires (11) are disposed, and an anti-rotation element (8) is provided, which prevents a positional variation between the pipe (2) and the shell (9).

7. Insulating arrangement according to claim 6, **characterized in that** the anti-rotation element (8) is formed by a partial adhesive joint, preferably in the form of a fillet joint (81) of a temperature-resistant adhesive or a paste between the external profile (7) and the pipe (2).

8. Insulating arrangement according to one of claims 1 to 6, **characterized in that** stiffening elements (12) are applied at least in sections onto the inside of the titanium foil (31).

## Revendications

1. Ensemble isolant pour des tubes, en particulier pour des conduits d'un système pneumatique dans un avion commercial, ce système comprenant au moins une couche isolante (6) ainsi qu'une enveloppe externe (3) qui présente au moins un joint longitudinal (13) obturable et une première et une seconde section d'extrémité, cet ensemble isolant étant **caractérisé en ce que** l'enveloppe externe (3) est constituée par une feuille de titane (33) dotée d'un profilage (4) et que sa première section d'extrémité (32) ainsi que sa seconde section d'extrémité (33) sont reliées chacune à un profilé de fermeture (7) et forment ainsi une coquille (9) dans laquelle la couche isolante (6), constituée de laine de verre, peut être insérée, le profilé de fermeture (7) étant un profilé en Z dont la branche supérieure (71) est reliée à la feuille de titane (31) tandis que la branche médiane (72) ainsi que la branche inférieure (73) accueillent la couche isolante (6).

2. Ensemble isolant selon la revendication 1, **caractérisé en ce que** la coquille (9) est une coquille pleine ouverte le long du joint longitudinal (13) et qui est à fleur du tube (2) en étant fermée par des ailettes de jonction (14, 14') prévues sur le joint longitudinal (13).

3. Ensemble isolant selon la revendication 1, **caractérisé en ce que** la coquille (9) est constituée de deux demi-coquilles qui présentent deux joints longitudinaux et qui sont positionnées sur le tube (2), la fermeture de l'isolation étant également assurée par des ailettes de jonction (14, 14') prévues sur les joints longitudinaux (13).

4. Ensemble isolant selon une des revendications 1 à 3, **caractérisé en ce que** la liaison le long du joint longitudinal (13) entre les ailettes de jonction (14, 14') est assurée par collage ou soudage.

5. Ensemble isolant selon une des revendications 1 à 4, **caractérisé en ce que** dans la zone de la liaison par joint longitudinal (13) est prévue une ailette de sécurisation (15) pour garantir la liaison par blocage de la forme.

6. Ensemble isolant selon une des revendications 1 à 5, **caractérisé en ce que** l'enveloppe externe (3) présente des trous de sortie (5) au-dessus desquels sont disposés des fils d'avertissement (11), et il est également prévu une sécurité antirotation (8) empêchant une modification de la position relative du tube (2) et de la coquille (9).

7. Ensemble isolant selon la revendication 6, **caractérisé en ce que** la sécurité antirotatioon (8) est constituée par une liaison partielle par collage, de préférence sous la forme d'un cordon (81) fait d'une colle résistant à la chaleur ou d'une pâte, disposé entre le profilé externe (7) et le tube (2).

8. Ensemble isolant selon une des revendications 1 à 6, **caractérisé en ce que** sur la face interne de la feuille de titane (31) sont déposés au moins en partie des éléments de raidissement (12).
